# EUROPÄISCHE PATENTSCHRIFT

(11) **EP 1 471 281 B1**
(45) Veröffentlichungstag und Bekanntmachung des Hinweises auf die Patenterteilung: **14.06.2006**
(21) Anmeldenummer: 04017481.5
(22) Anmeldetag: 08.02.2002
(51) Int. Cl.: F16H 1/28, F16H 57/04

(54) **Planetengetriebe**
Planetary gear
Transmission planétaire

(30) Priorität: 23.04.2001 DE 10119998; 22.05.2001 DE 10125148
(43) Veröffentlichungstag der Anmeldung: 27.10.2004
(62) Teilanmeldung aus: 02719784.7
(73) Patentinhaber: Wittenstein AG, 97999 Igersheim (DE)
(72) Erfinder: Bayer, Thomas, 97999 Igersheim (DE); Old, Christof, 97980 Bad Mergentheim (DE)
(74) Vertreter: Weiss, Peter

(56) Entgegenhaltungen:
- DE-C- 19 808 184
- FR-A- 2 622 946
- US-A- 3 502 177
- US-A- 5 476 582
- US-A- 6 105 464
- US-A1- 2001 008 194
- PATENT ABSTRACTS OF JAPAN Bd. 2000, Nr. 13, 5. Februar 2001 (2001-02-05) & JP 2000 297861 A (TOCHIGI FUJI IND CO LTD), 24. Oktober 2000 (2000-10-24)

## Beschreibung

Die vorliegende Erfindung betrifft ein Getriebe oder Planetengetriebe mit einer Antriebswelle und zumindest einer Abtriebswelle, welche über zumindest ein Element in Verbindung stehen, und Antriebswelle sowie Abtriebswelle über Lager gegenüber zumindest einem Gehäuseteil gelagert sind, wobei in zumindest einem Gehäuseteil eine Mehrzahl von Permanentmagneten angeordnet ist.

Derartige Planetengetriebe sind in vielfältiger Form und Ausführung im Markt bekannt und gebräuchlich. Dabei können die Elemente formschlüssige Zahnräder, kraftschlüssige Riemen, Seile, Ketten, Kurbel- oder Schubgetriebe-Elemente sein. Hierauf sei die vorliegende Erfindung nicht beschränkt.

Nachteilig bei herkömmlichen Planetengetrieben ist, dass diese insbesondere einem hohen Verschleiss unterliegen, und sich hierdurch Abrieb im Getriebe verteilt, der die Oberflächen der Elemente beschädigt.

Zudem ist nachteilig, dass herkömmliche Planetengetriebe aufwendig herzustellen und zu montieren sind.

Die FR 2 622 946 beschreibt ein Differenzial, bei welchem auf der Abtriebswelle, insbesondere dessen Gehäuse ein Flansch vorgesehen ist, wobei der Abtriebswelle eine Hülse aufsitzt, wobei zwischen dem stirnseitigen Flansch und der Hülse in einem Ringraum zwei Dichtelemente vorgesehen sind.

Die US 4,817,846 offenbart eine Dichtungsanordnung zwischen einem Gehäuseteil und einer Welle, wobei der Welle eine Hülse aufsitzt. Stirnseitig am Gehäuseteil ist ein lamellenartiger Dichtungsflansch angeschraubt, der mehrere Dichtungen enthält.

Die gattungsgemäße US 5,476,582 offenbart ein Differenzialgehäuse, in welchem magnetisch wirkende Filterelemente angeordnet sind.

Die US 6,105,464 offenbart ein Getriebe, in dessen Gehäuse ein Magnet vorgesehen ist.

Der vorliegenden Erfindung liegt die Aufgabe zugrunde, ein Getriebe, insbesondere ein Planetengetriebe der eingangs genannten Art zu schaffen, welches die genannten Nachteile beseitigt, mit welchem auf sehr kostengünstige und effektive Weise die Lebensdauer erhöht werden soll. Ferner sollen die Fertigungszeiten und Montagekosten eines derartigen Getriebes reduziert werden.

Zur Lösung dieser Aufgabe führen die Merkmale des Patentanspruches 1 und 2.

Bei der vorliegenden Erfindung ist ein Getriebe, insbesondere ein Planetengetriebe geschaffen, bei welchem im Bereich der Stirnräder, Planetenräder, Verzahnung des mittleren Gehäuseteiles eine Mehrzahl von vorzugsweise radial umlaufend angeordneten Permanentmagneten entweder stirnseitig im letzten Gehäuseteil angeordnet ist, oder auch an einer inneren Mantelfläche des mittleren Gehäuseteiles nahe der Verzahnung angeordnet sein können. Diese dienen dazu, um permanent und lageunabhängig des Planetengetriebes Abrieb oder ferritisches Material durch Abrieb im Betrieb sofort aufzunehmen, ohne dass diese im Betrieb die einzelnen Elemente durchlaufen. Durch die radial umlaufend angeordneten Permanentmagneten ist das Planetengetriebe unabhängig von dessen Einbaulage.

Auch hat sich als vorteilhaft erwiesen, der Antriebswelle, insbesondere dessen Scheibenumlaufträger zumindest einen Permanentmagneten zuzuordnen, der in dessen Stirnseite zentrisch zur Mittelachse in diesen eingesetzt ist, so dass zwischen einer Stirnseite des Scheibenumlaufträgers und dem Permanentmagneten eine Mulde als Spansammelraum, für Späneabried, ferritisches Material etc. gebildet ist.

Durch das zentrische Einsetzen des Permanentmagneten stirnseitig in den Scheibenumlaufträger wird gewährleistet, dass kleine Umwuchten der Abtriebswelle entstehen und gleichzeitig ferritisches Material insbesonder nahe der Planetenräder, die mit dem Stirnrad in Eingriff stehen, durch den Permanentmagneten aufgenommen werden. Hierdurch wird Abrieb unmittelbar im Zahnflankeneingriffsbereich zwischen Stirnrad und Planetenräder aufgenommen bzw. abgesondert, so dass der Abrieb hierduch keine anderen Elemente beschädigt.

Ferner hat sich als vorteilhaft erwiesen, ein Gehäuse des Planetengetriebes dreiteilig auszubilden, wobei im ersten Gehäuseteil die Abtriebswelle mit stirnseitigem Scheibenumlaufträger gelagert ist, in welchem vorzugsweise die Bolzen zur Aufnahme der Planetenräder eingepresst sind. Zum Einpressen hat sich als vorteilhaft erwiesen, den Bolzen entweder als Hohlelement auszubilden oder mindest teilweise eine Aufnahmeöffnung im Scheibenumlaufträger mit einer Entlüftungsöffnung zu versehen. Zudem hat sich als vorteilhaft erwiesen, das Bolzenelement zumindest teilweise als Hohlelement auszubilden und im Bereich der Planetenräder eine Mehrzahl von radialen Bohrungen vorzusehen, die zum Zuführen von Schmiermitteln für das Nadellager des Planetenradträgers dienen.

Ein weiterer Vorteil bei der vorliegenden Erfindung ist, dass durch das dreiteilig ausgebildete Grehäuse eine Verzahnung durch die Planetenräder innerhalb des mittleren Gehäuseteiles direkt aus diesem hergestellt werden kann, beispielsweise durch Räumen. Hierdurch kann beispielsweise der mittlere Gehäuseteil aus einem speziell für die Verzahnung geeigneten Material hergestellt sein. Dies kann dann anschliessend mit dem ersten Gehäuseteil verbunden werden. Bevorzugt wird stirnseitig das zweite Gehäuseteil mit dem ersten Gehäuseteil fest und passgenau verschweisst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Draufsicht auf ein erfindungsgemässes Getriebe, insbesondere Planetengetriebe;
Figur 2 eine teilweise aufgeschnittene perspektivische Ansicht auf das Planetengetriebe gemäss Figur 1;
Figur 3 einen schematisch dargestellten Längsschnitt durch das Planetengetriebe gemäss Figur 1;
Figur 4 einen Längsschnitt eines weiteren Ausführungsbeispieles eines weiteren Planetengetriebes gemäss Figur 1;
Figur 5 einen vergrössert dargestellten Teillängsschnitt durch das Getriebe gemäss Figur 1 im Bereich eines ersten Gehäuseteiles;
Figur 6 einen vergrössert dargestellten Teil eines Teillängsschnittes des ersten Gehäusteiles als weiteres Ausführungsbeispiel;
Figur 7 eine Draufsicht auf ein drittes Gehäuseteil mit einer Mehrzahl von stirnseitigen Sacklöchern zur Aufnahme von Magneten.

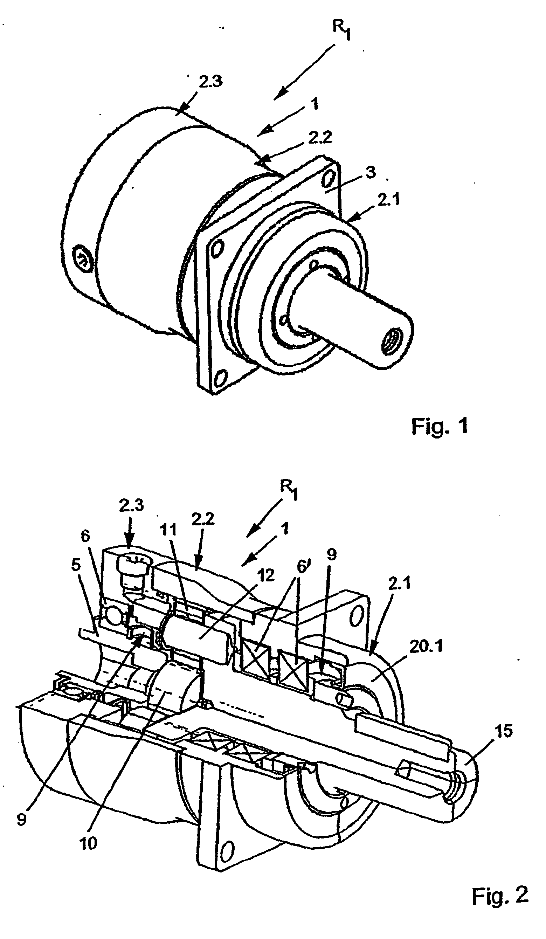

Gemäss Figur 1 weist ein erfindungsgemässses Getriebe R₁ ein Gehäuse 1 auf, welches vorzugsweise in drei Gehäuseteile 2.1, 2.2, 2.3 unterteilt ist. Der erste Gehäuseteil 2.1 ist mit einem Flansch 3 zum Festlegen des Getriebes R₁ an einem beliebigen Antriebselement od. dgl. versehen.

In das Gehäuseteil 2.3 ragt (siehe auch Figur 2) eine Antriebswelle 5 ein und ist über zumindest ein Lager 6 drehbar gegenüber dem Gehäuseteil 2.3 gelagert. Innerhalb der Lager 6 ist die Antriebswelle 5 mit einem Absatz 7 versehen, wobei zwischen Absatz 7 und einer inneren Mantelfläche 8 ein Ringraum 9 gebildet ist.

Ferner sitzt der Antriebswelle 5 ein Stirnrad 10 auf, welches vorzugweise drei Planetenräder 11 kämmt, die auf Bolzenelementen 12 über Nadellager 13 gelagert sind. Die Bolzenelemente 12 sind in einen Scheibenumlaufträger 14 einer Abtriebswelle 15 eingepresst. Innen im Gehäuseteil 2.2 ist eine Verzahnung 16 radial umlaufend angeordnet. Vorzugsweise ist das Gehäuseteil 2.2 als Hülse ausgebildet und weist innen die Verzahnung 16 auf. Dabei kämmen die Planetenräder 11 die Verzahnung 16 des Gehäuseteiles 2.2.

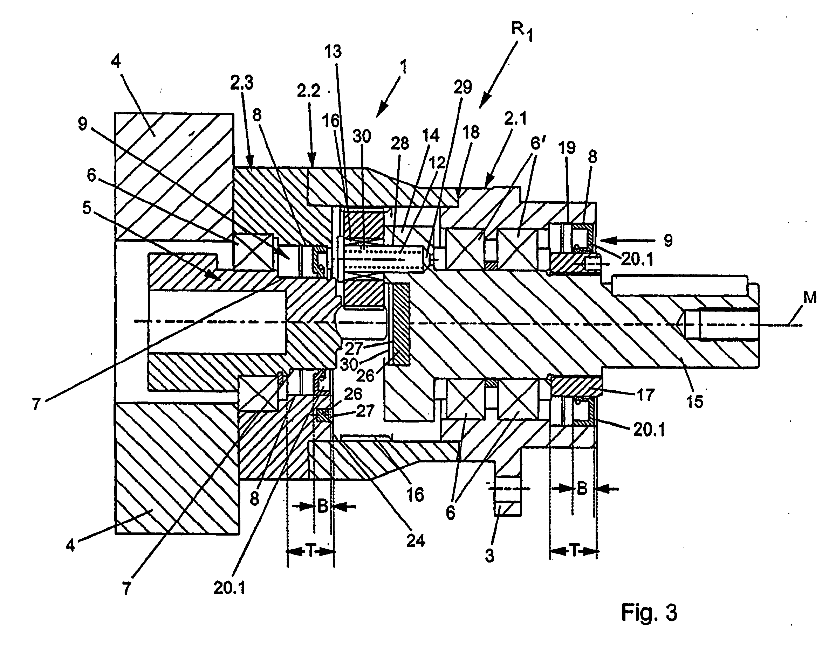

Die Abtriebswelle 15 ist, wie es aus dem bevorzugten Ausführungsbeispiel gemäss Figur 3 hervorgeht, über zwei nebeneinander angeordnete Lager 6 innerhalb des Gehäuseteiles 2.1 drehbar gelagert und gegenüber dem Gehäuseteil 2.2 über einen Spannring 17 festgelegt.

Über hier nicht näher bezifferte Absätze und Flansche sitzt das Gehäuseteil 2.3 wiederlösbar stirnseitig dem Gehäuseteil 2.2 auf.

Ferner hat sich als besonders vorteilhaft erwiesen, das Gehäuseteil 2.2 andernends stirnseitig mit dem Gehäuseteil 2.1 fest zu verbinden, insbesondere über eine Schweissnaht 18.

Hierdurch kann gewährleistet werden, dass insbesondere die Verzahnung 16 sehr kostengünstig und präzise in dem Gehäuseteil 2.2 selbst, beispielsweise durch Räumen hergestellt werden kann.

Ferner ist von Vorteil bei der vorliegenden Erfindung, dass an eine beliebige Adapterplatte 4 das Gehäuseteil 2.3 direkt anschliessbar ist. Bevorzugt überlappt die Adapterplatte 4 zumindest den Aussenring des Lagers 6, so dass das Lager 6 im Gehäuseteil 2.3 gehalten wird. An die Adapterplatte 4 lässt sich bspw. das vollständige Planetengetriebe, insbesondere der Gehäuseteil 2.3 wiederlösbar und präzise festlegen. Im Anschluss an die Lager 6 des Gehäuseteiles 2.1 ist im stirnseitigen Bereich ein weiterer Absatz 19 gebildet, wobei zwischen Abtriebswelle 15 und Absatz 19 bzw. innerer Mantelfläche 8 des Gehäuseteiles 2.1 ein weiterer Ringraum 9 gebildet ist. Dabei ist der Ringraum 9 von einer Tiefe T, die in einem bevorzugten Ausführungsbeispiel einer zweifachen Breite B eines Dichtelementes 20.1 entspricht.

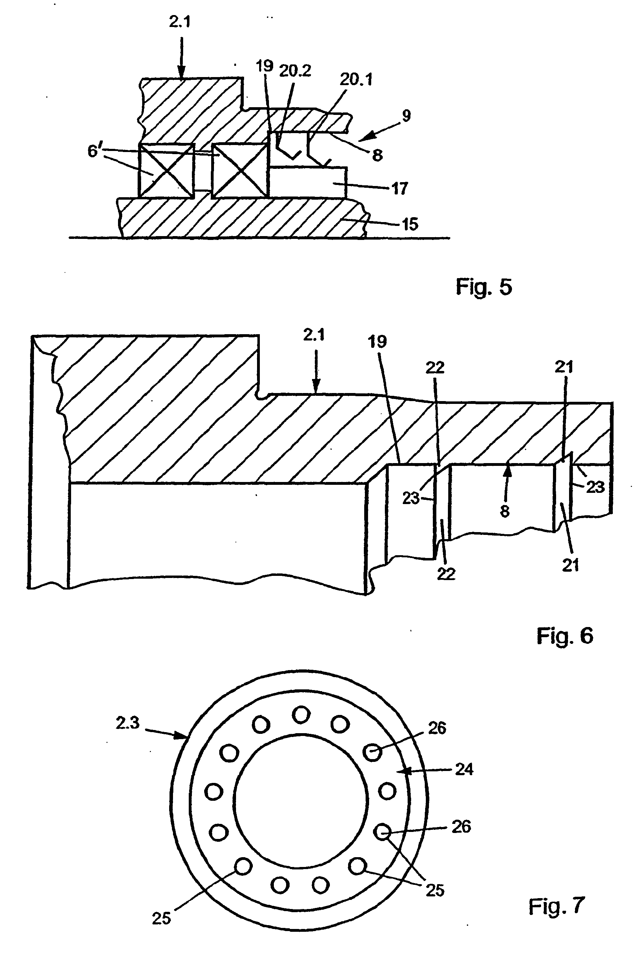

Ein wesentlicher Vorteil bei der vorliegenden Erfindung ist, dass in den Ringraum 9, hier nicht dargestellt, über seine Tiefe T zwei Dichtelemente 20.1 ineinander, insbesondere hintereinander eingesetzt werden können. Dabei ist das Dichtelement 20.1 das stirnseitig abschliessende Dichtelement, wobei ein zweites Dichtelement 20.2 (siehe Figur 5) in den Ringraum 9 eingesetzt werden kann. Dabei kann das Dichtelement 20.1 oder 20.2 als zusätzliches Sicherheits-Dichtelement, welches nicht aktiv ist, in dem Ringraum 9 eingesetzt sein. Fällt eines der beiden Dichtelemente 20.1 oder 20.2 aus bzw. lässt eines der beiden Dichtelemente 20.1 oder 20.2, insbesondere als Simmering ausgebildet, Öl nach aussen austreten, so werden über hier nicht näher dargestellte Sensorelemente die Lekagen erkannt, so dass über ebenfalls hier nicht dargestellte Elemente oder Einrichtungen das nicht aktive Dichtelement aktiviert wird. Hierzu ist es erforderlich, einen Ringraum 9 vorzusehen, der wenigstens zwei Dichtelemente 20.1, 20.2 axial hintereinander aufnimmt.

Damit die Dichtelemente 20.1, 20.2 fest im Ringraum 9 gehalten bzw. verankert werden können, sind an der inneren Mantelfläche 8 der Gehäuseteile 2.1 und 2.3 (siehe auch Figuren 3 und 6) vorzugsweise umlaufende Ausnehmungen 21 oder Erhöhungen 22 vorgesehen, in welche das Material des Dichtelementes 20.1, 20.2 eingreift, oder die Erhöhung 22 in das Material des Dichtelementes 20.1, 20.2 eingedrückt wird.

Dabei ist jeweils eine Kante 23 gebildet, die ein Herausrutschen des Dichtelementes 20.1, 20.2 aus dem Ringraum 9 verhindert.

Im dem Ausführungsbeispiel gemäss Figur 3 ist das Lager 6 zwischen Antriebswelle 5 und Gehäuseteil 2.3 stirnseitig nach aussen gerichtet angeordnet, da dieses häufig ausgewechselt werden muss. Um eine Abdichtung, insbesondere der in Schmiermittel laufenden Elemente 10, 11, 12 und 14 zu erhalten, ist der Ringraum 9 zur Aufnahme der Dichtelemente 20.1, 20.2 zwischen dem Absatz 7 der Antriebswelle 5 und der inneren Mantelfläche 8 des Gehäuseteiles 2.3 gebildet. Auch hier entspricht eine Tiefe T der Mantelfläche 8 vorzugsweise einer doppelten Breite B eines Dichtelementes 20.1.

Gemäß der vorliegenden einen Variante der Erfindung als sind in einer Stirnseite 24 (siehe auch Figur 7) eine Mehrzahl von Sacklöchern 25 vorgesehen, in welche, wie insbesondere in Figur 7 dargestellt ist, radial umlaufend jeweils Permanentmagnete 26 vorgesehen sind. Dabei kann es von Vorteil sein, dass die Permanentmagnete 26 im Sackloch 25 zurückfallend eingesetzt sind, so dass zwischen der Stirnseite 24 und dem Permanentmagneten 26 im Sackloch 25 eine Mulde 27 gebildet ist. Diese dient zum Aufnehmen von Metallspänen oder ferritischen Partikeln, die infolge von Verschleiss im Betrieb der Elemente 10, 11, 12 und 14 entstehen. Da insbesondere die oben genannten Elemente 10, 11, 12 und 14 im Betrieb einem Verschleiss unterliegen, ist die Stirnseite 24 mit dem vorgesehenen Permanentmagneten 26 nahe zu den Planetenräder 11, bzw. zu der der Verzahnung 16 hin ausgerichtet. Über die Anordnung einer Mehrzahl entsprechender Permanentmagneten 26 radial in dem Gehäuseteil 2.3, nahe der Planetenräder 11 bzw. Verzahnung 16 lässt sich auf diese Weise sehr effektiv ferritisches verschlissenes Material absondern und aufnehmen. Wird beispielsweise das Lager 6 ausgetauscht, indem der Gehäuseteil 2.3 vom Gehäuseteil 2.2 abgeflanscht wird, so können sehr zugänglich die Mulden 27 gereinigt werden.

Ferner ist gemäβ einer anderen Variante der Erfindung der Abtriebswelle 15, und deren Scheibenumlaufträger 14 ebenfalls ein Permamentmagnet 26 in eine Stirnseite 30, vorzugsweise zurückversetzt, eingesetzt, so dass zwischen der Stirnseite 30 und dem Permanentmagneten 26 eine Mulde 27 zum Aufnehmen von Spänen und Abrieb gebildet ist.

Wichtig ist hier, dass zur Vermeidung von Unwuchten der Permamentmagnet 26 zentrisch zur Mittelachse M ausgerichtet stirnseitig in den Scheibenumlaufträger 14 eingesetzt ist.

Hierdurch wird insbesondere der Abrieb des Stirnrades 10 sowie auch der Planetenräder 11 durch den Permanentmagneten 26, insbesondere in dessen Mulde 27 aufgenommen.

Auch soll im Rahmen der vorliegenden Erfindung liegen, die Permanentmagneten 26 radial innen im Gehäuseteil 2.2 vorzugsweise nahe der Verzahnung 16 um dessen Mantelfläche verteilt anzuordnen. Hierauf sei die Erfindung nicht beschränkt.

Wie ferner aus Figur 3 hervorgeht, kann das Bolzenelement 12 aus vollem Rundmaterial hergestellt sein. Dann ist endseits einer Aufnahmeöffnung 28 im Scheibenumlaufträger 14 eine Entlüftungsöffnung 29 vorgesehen, die zum erleichterten Einpressen der Bolzenelemnte 12 in die Aufnahmeöffnung 28 dient.

Ist das Bolzenelement 12 als Hohlwelle, wie es hier gestrichelt angedeutet ist, ausgebildet, so kann die Entlüftungsöffnung 29 entfallen. Vorzugsweise ist dann eine Mehrzahl von radialen Bohrungen 30, wie es ebenfalls gestrichelt dargestellt ist, im Bolzenelement 12 vorgesehen, die einer zusätzlichen Schmierung des Nadellagers 13 für die Planetenräder 11 dienen.

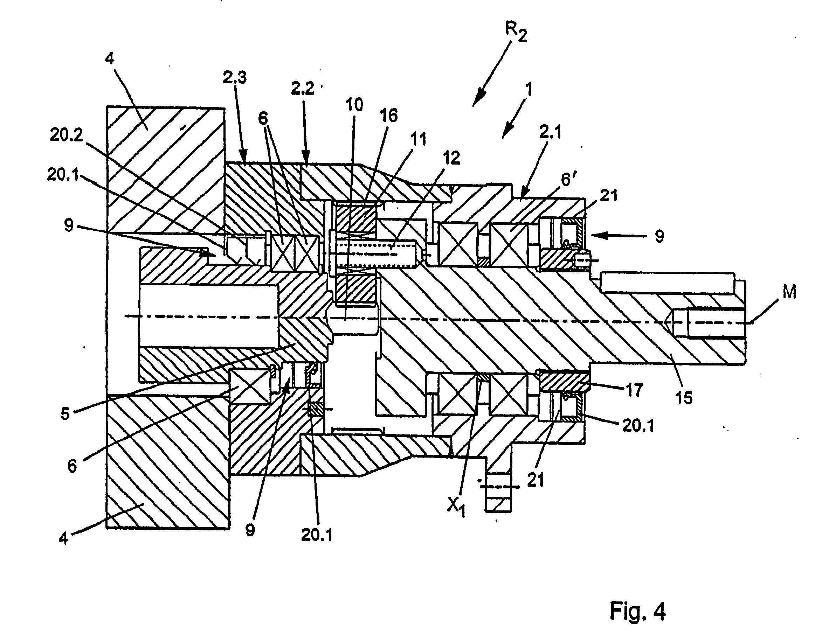

Das Ausführungsbeispiel gemäss Figur 4 zeigt ein Getriebe R₂, welches im wesentlichen dem gemäss Figur 3 entspricht. Hier sind zwei Möglichkeiten der Anordnung der Dichtelemente 20.1, 20.1 angedeutet. Entweder sind die Dichtelemente 20.1, 20.2 im endseitigen stirnseitigen Bereich des Gehäuseteiles 2.3 in den Ringraum 9 eingesetzt, wie es oberhalb einer Mittelachse M im Längsschnitt dargestellt ist, oder sie sind wie unterhalb der Mittelachse M dargestellt angeordnet, was der Anordnung gemäss dem Ausführungsbeispiel Figur 3 entspricht. Dabei ist der Ringraum 9 innerhalb des Lagers 6 zur Aufnahme der beiden Dichtelemente 20.1, 20.2 gebildet. Auf diese Weise kann ebenfalls Einfluss auf die Verwendung unterschiedlicher Lager 6', in Schmiermittel laufend oder selbstschmierend, genommen werden.

Ferner ist, wie es bspw. in Figur 4 dargestellt ist, die Abtriebswelle 15 über zwei zueinander beabstandete Lager 6' gelagert. Dabei sitzt ein Ring X₁ zwischen den Lagern 6' der Abtriebswelle auf und beabstandet die Lager 6' axial zueinander.

Je nach Breite des Ringes X₁ lässt sich ein Spiel der Abtriebswelle 15 über eine als Spannring 17 ausgebildete Wellenmutter einstellen. Dabei kann eines der Lager 6 stirnseitig, ggf. beabstandet über einen zusätzlichen Distanzring an dem Scheibenumlaufträger 14 anliegen. Dies soll ebenfalls im Rahmen der vorliegenden Erfindung liegen.

## Patentansprüche

1. Getriebe oder Planetengetriebe mit einer Antriebswelle (5) und zumindest einer Abtriebswelle (15), welche über zumindest ein Element (10, 11, 12, 14) in Verbindung stehen, wobei Antriebswelle (5) sowie Abtriebswelle (15) über Lager gegenüber zumindest einem Gehäuseteil (2.1 bis 2.3) gelagert sind, und wobei in zumindest einem Gehäuseteil (2.1 bis 2.3) eine Mehrzahl von Permanentmagneten (26) angeordnet ist,
**dadurch gekennzeichnet,**
**dass** an der Abtriebswelle (15) ein Scheibenumlaufträger (14) zur Verbindung mit der Antriebswelle (5) vorgesehen ist und zumindest ein Permanentmagnet (26) in eine Stirnseite (30) des Scheibenumlaufträgers (14) eingesetzt ist.

2. Getriebe oder Planetengetriebe mit einer Antriebswelle (5) und zumindest einer Abtriebswelle (15), welche über zumindest ein Element (10, 11, 12, 14) in Verbindung stehen, wobei Antriebswelle (5) sowie Abtriebswelle (15) über Lager gegenüber zumindest einem Gehäuseteil (2.1 bis 2.3) gelagert sind, und wobei in zumindest einem Gehäuseteil (2.1 bis 2.3) eine Mehrzahl von Permanentmagneten (26) angeordnet ist, **dadurch gekennzeichnet, dass** das Gehäuseteil (2.3) eine Stirnseite (24) aufweist, in der radial umlaufend Sacklöcher (25) angeordnet sind, in die die Mehrzahl der Permanentmagnete (26) eingesetzt sind.

3. Getriebe nach Anspruch 1, **dadurch gekennzeichnet, dass** die Mehrzahl der Permanentmagnete (26) stirnseitig in dem zumindest einen Gehäuseteil (2.3) in Sacklöchern (25) angeordnet sind.

4. Getriebe nach wenigstens einem der Ansprüche 1 bis 3, **dadurch gekennzeichnet, dass** die jeweilige Stirnseite (24 bzw. 30) nahe der Elemente (10, 11, 12, 14), insbesondere nahe zum Scheibenumlaufträgern (14) bzw. nahe zu den Planetenrädern (11), ausgerichtet ist.

5. Getriebe nach wenigstens einem der Ansprüche 2 bis 4, **dadurch gekennzeichnet, dass** die Mehrzahl der Permanentmagnete (26) derart in die Sacklöcher (25) eingesetzt ist, daß zwischen dem jeweligen Permanentmagneten (26) und der Stirnseite (24) des Gehäuseteiles (2.3) im Sackloch (25) eine Mulde (27) zur Aufnahme von Abrieb gebildet ist.

6. Getriebe nach wenigstens einem der Ansprüche 1 bis 5, **dadurch gekennzeichnet, dass** zwischen der Stirnseite (30) des Scheibenumlaufträgers (14) und dem Permanentmagneten (26) eine Mulde (27) zur Aufnahme von ferritischem Abrieb, Späne oder Material ausgebildet ist.

7. Getriebe nach Anspruch 6, **dadurch gekennzeichnet, dass** der Permanentmagnet (26) achsensymmetrisch zur Mittelachse (M) in die Stirnseite (30) des Scheibenumlaufträgers (14) eingesetzt ist und einen Eingriffsbereich von Planetenräder (11) und Stirnrad (10) stirnseitig übergreift.

8. Getriebe nach wenigstens einem der Ansprüche 1 bis 7, **dadurch gekennzeichnet, dass** das zumindest eine Gehäuseteil (2.3) stirnseitig an eine Adapterplatte (4) anschliessbar ist, welche ein Lager (6) zumindest teilweise übergreift und dieses hält.

9. Getriebe nach wenigstens einem der Ansprüche 1 bis 8, **dadurch gekennzeichnet, dass** in einem weiteren Gehäuseteil (2.1) zwei axial über einen Ring (X₁) beabstandete Lager (6') angeordnet sind, wobei eines der zwei Lager am Scheibenumlaufträger (14) abgestützt ist und das andere Lager über eine Wellenmutter (17) auf der Abtriebs welle (15) gespannt ist, wobei der Ring (X₁) zur Abstimmung der zwei Lager (6') in seiner Breite beliebig wählbar ist.

## Claims

1. Gear or planetary gear, having a drive shaft (5) and at least one driven shaft (15), which are connected by at least one element (10, 11, 12, 14), the drive shaft (5) as well as the driven shaft (15) being mounted via bearings relative to at least one housing part (2.1 to 2.3), and a plurality of permanent magnets (26) being disposed in at least one housing part (2.1 to 2.3), **characterised in that** a circumferential disc support (14) is provided on the driven shaft (15) for connection to the drive shaft (5), and at least one permanent magnet (26) is inserted in an end face (30) of the circumferential disc support (14).

2. Gear or planetary gear, having a drive shaft (5) and at least one driven shaft (15), which are connected by at least one element (10, 11, 12, 14), the drive shaft (5) as well as the driven shaft (15) being mounted via bearings relative to at least one housing part (2.1 to 2.3), and a plurality of permanent magnets (26) being disposed in at least one housing part (2.1. to 2.3), **characterised in that** the housing part (2.3) has an end face (24), in which radially encircling blind bores (25) are disposed, in which the plurality of permanent magnets (26) are inserted.

3. Gear according to claim 1, **characterised in that** the plurality of permanent magnets (26) are disposed in blind bores (25) in the end face of the at least one housing part (2.3).

4. Gear according to at least one of claims 1 to 3, **characterised in that** the respective end face (24 or 30 respectively) is orientated in the vicinity of the elements (10, 11, 12, 14), more especially in the vicinity of the circumferential disc support (14) or in the vicinity of the planet wheels (11).

5. Gear according to at least one of claims 2 to 4, **characterised in that** the plurality of permanent magnets (26) are inserted in the blind bores (25) in such a manner that, between the respective permanent magnet (26) and the end face (24) of the housing part (2.3), a recess (27) is formed in the blind bore (25) to accommodate abraded material.

6. Gear according to at least one of claims 1 to 5, **characterised in that**, between the end face (30) of the circumferential disc support (14) and the permanent magnet (26), a recess (27) is provided for accommodating abraded ferric material, shavings or matter.

7. Gear according to claim 6, **characterised in that** the permanent magnet (26) is inserted into the end face of the circumferential disc support (14) in an axis-symmetrical manner relative to the central axis (M), and overlaps with its end face an engagement region between planetary wheels (11) and spur wheel (10).

8. Gear according to at least one of claims 1 to 7, **characterised in that** the at least one housing part (2.3) is connectable on the end face to an adapter plate (4), which overlaps a bearing (6) at least partially and retains said bearing.

9. Gear according to at least one of claims 1 to 8, **characterised in that**, in an additional housing part (2.1) two bearings (6') are disposed, spaced apart axially via a ring (X₁), one of the two bearings being supported on the circumferential disc support (14), and the other bearing being tensioned via a shaft nut (17) on the driven shaft (15), the ring (X₁) being selectable in any desired width for the adaptation of the two bearings (6').

## Revendications

1. Engrenage ou engrenage planétaire avec un arbre d'entraînement (5) et au moins un arbre de sortie (15) communiquant l'un avec l'autre par l'intermédiaire d'au moins un élément (10, 11, 12, 14), tant l'arbre d'entraînement (5) que l'arbre de sortie (15) étant montés par l'intermédiaire de roulements vis-à-vis d'au moins une partie de boîtier (2.1 à 2.3) et dans au moins une partie de boîtier (2.1 à 2.3) étant disposés une pluralité d'aimants permanents (26),
**caractérisé par le fait**
**que** sur l'arbre de sortie (15) est prévu un support planétaire en forme de disque (14) destiné à la connexion avec l'arbre d'entraînement (5) et qu'il est placé au moins un aimant permanent (26) dans une face frontale (30) du support planétaire en forme de disque (14).

2. Engrenage ou engrenage planétaire avec un arbre d'entraînement (5) et au moins un arbre de sortie (15) communiquant l'un avec l'autre par l'intermédiaire d'au moins un élément (10, 11, 12, 14), tant l'arbre d'entraînement (5) que l'arbre de sortie (15) étant montés par l'intermédiaire de roulements vis-à-vis d'au moins une partie de boîtier (2.1 à 2.3) et dans au moins une partie de boîtier (2.1 à 2.3) étant disposés une pluralité d'aimants permanents (26), **caractérisé par le fait que** la partie de boîtier (2.3) présente une face frontale (24) dans laquelle sont disposés en circonférence radiale des trous borgnes (25) dans lesquels sont placés la pluralité d'aimants permanents (26).

3. Engrenage selon la revendication 1, **caractérisé par le fait que** la pluralité d'aimants permanents (26) sont disposés du côté frontal dans des trous borgnes (25) dans l'au moins une partie de boîtier (2.3).

4. Engrenage selon au moins l'une des revendications 1 à 3, **caractérisé par le fait que** la face frontale respective (24 ou 30) est orientée à proximité des éléments (10, 11, 12, 14), en particulier à proximité du support planétaire en forme de disque (14) ou à proximité des roues planétaires (11).

5. Engrenage selon au moins l'une des revendications 2 à 4, **caractérisé par le fait que** la pluralité d'aimants permanents (26) sont placés dans les trous borgnes (25) de sorte qu'entre les aimants permanents respectifs (26) et la face frontale (24) de la partie de boîtier (2.3) est formée, dans le trou borgne (25), une auge (27) destinée à recevoir les produits d'abrasion.

6. Engrenage selon au moins l'une des revendications 1 à 5, **caractérisé par le fait qu'**entre la face frontale (30) du support planétaire en forme de disque (14) et l'aimant permanent (26) est réalisée une auge (27) destinée à recevoir les produits d'abrasion ferritiques, les copeaux ou de la matière.

7. Engrenage selon la revendication 6, **caractérisé par le fait que** l'aimant permanent (26) est placé symétrique à l'axe par rapport à l'axe médian (M) dans la face frontale (30) du support planétaire en forme de disque (14) et vient en prise, du côté frontal, par-dessus une zone d'engrenage des roues planétaires (11) avec la roue droite
(10).

8. Engrenage selon au moins l'une des revendications 1 à 7, **caractérisé par le fait que** l'au moins une partie de boîtier (2.3) peut être raccordée du côté frontal à une plaque d'adaptation (4) qui vient partiellement en prise par-dessus un roulement (6) et maintient ce dernier.

9. Engrenage selon au moins l'une des revendications 1 à 8, **caractérisé par le fait que** dans une autre partie de boîtier (21) sont disposés deux roulements (6) distants axialement l'un de l'autre par l'intermédiaire d'une bague (X₁), l'un des deux roulements (14) s'appuyant sur le support planétaire en forme de disque (14) et l'autre roulement étant serré sur l'arbre de sortie (15) par l'intermédiaire d'un écrou d'arbre (17), la bague (X₁) pouvant être choisie de largeur quelconque en vue d'accorder les deux roulements (6).
